(19) **Europäisches Patentamt**
**European Patent Office**
**Office européen des brevets**

(11) **EP 2 939 484 B1**

(12) **EUROPEAN PATENT SPECIFICATION**

(45) Date of publication and mention
of the grant of the patent:
**05.12.2018 Bulletin 2018/49**

(51) Int Cl.:
*H04W 72/00* (2009.01)     *H04W 76/40* (2018.01)
*H04W 76/14* (2018.01)

(21) Application number: **13814574.3**

(22) Date of filing: **27.12.2013**

(86) International application number:
**PCT/EP2013/078064**

(87) International publication number:
**WO 2014/102335 (03.07.2014 Gazette 2014/27)**

(54) **MULTI-BAND DEVICE-TO-DEVICE MULTICAST OR BROADCAST COMMUNICATION**

MULTICAST- UND BROADCAST-KOMMUNIKATION FÜR VORRICHTUNG IN MEHREREN FREQUENZBÄNDER

COMMUNICATION DE DIFFUSION OU MULTIDIFFUSION DE DISPOSITIF À DISPOSITIF MULTIBANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2012 EP 12199665**

(43) Date of publication of application:
**04.11.2015 Bulletin 2015/45**

(73) Proprietors:
• **Koninklijke KPN N.V.**
**3072 AP Rotterdam (NL)**
• **Nederlandse Organisatie voor toegepast-natuurwetenschappelijk onderzoek TNO**
**2595 DA 's-Gravenhage (NL)**

(72) Inventors:
• **PAIS, Adrian Victor**
**NL-2274 JM Voorburg (NL)**
• **JORGUSESKI, Ljupco**
**NL-2282 TR Rijswijk (NL)**

(74) Representative: **Wuyts, Koenraad Maria**
**Koninklijke KPN N.V.**
**Intellectual Property Group**
**P.O. Box 25110**
**3001 HC Rotterdam (NL)**

(56) References cited:
**US-A1- 2011 258 327**

• **TIMO KOSKELA ET AL: "Clustering Concept Using Device-To-Device Communication in Cellular System", WIRELESS COMMUNICATIONS AND NETWORKING CONFERENCE (WCNC), 2010 IEEE, IEEE, PISCATAWAY, NJ, USA, 18 April 2010 (2010-04-18), pages 1-6, XP031706220, ISBN: 978-1-4244-6396-1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD OF THE INVENTION

The present invention relates to broadcasting and multicasting of signals. More specifically the invention relates to device-to-device broadcasting and multicasting between devices that have network subscriptions at different operators.

### BACKGROUND

In telecommunication and information theory broadcasting refers to a method of transferring a message formed by one or more data packets to multiple recipients or hosts simultaneously. Broadcasting can be performed as a high level operation in a program or it may be a low level networking operation. With broadcasting, a data packet is received by multiple devices on the network or a part of the network. Typically a broadcast address is used as a target network address which is received by the network-attached hosts rather than by a specific host. Broadcasting of a message is in contrast to unicasting of a message wherein a host sends data packets to another single host typically identified by a unique network address.

Multicasting refers to a method of delivering a message formed by one or more data packets to a group of recipients or hosts simultaneously in a single transmission from the source. If a network is involved, copies of the data packets are automatically created in network elements, such as routers, when required by the topology of the network. In e.g. IP multicast, which is often employed in Internet Protocol (IP) applications of streaming media and Internet television, the implementation of the multicast concept occurs at the IP routing level, where routers create optimal distribution paths for data packets sent to a multicast destination address.

Broadcasting and multicasting can be performed on fixed networks, such as LANs or WANs, on mobile networks, such as WLANs, 3GPP-based networks or 3GPP2-based networks, or on mixed networks having fixed parts and mobile parts.

From the 3GPP standard for mobile communication systems a multimedia broadcast multicast service (MBMS) is known which is designed to deliver broadcast and multicast services from a single base station to multiple mobile devices receiving the same content. The primary benefit of MBMS is an efficient utilization of frequency spectrum resources by ensuring that content needed by several mobile devices uses a single channel or bit stream rather than individual bit streams to each mobile device. In MBMS the broadcast mode refers to unidirectional point-to-multipoint type of transmission of multimedia data from a single source (base station) to the users that are found in a defined broadcast service area. The broadcast mode uses radio resources efficiently since the data is transmitted over a common radio channel. In MBMS the multicast mode differs from the broadcast mode in that where the user does not need to subscribe to each broadcast service separately in broadcast mode, in multicast mode the services can be ordered separately. The subscription and group joining for the multicast mode services could be done by the mobile network operator, the user or a separate service provider.

Recent developments in de 3GPP standard relate to Long Term Evolution (LTE) networks and devices. LTE, also known as 4G (i.e. fourth generation) mobile communications standard, is a standard for wireless communication of high-speed data for mobile phones and data terminals. It is a successor of GSM/EDGE (also known as 2G or 2.5G) and UMTS/HSPA (also known as 3G) network technologies, increasing the capacity and speed using a different radio interface together with core network improvements. Recent LTE extensions allow for device-to-device (D2D) communications, either directly or using the nearby base station as a relay, next to traditional communications that is exclusively between base stations and mobile devices.

The need for multicast and broadcast communication in case of LTE D2D scenario is recognized by the LTE D2D research community. However, the proposed solutions do not cover multi-operator situations where participants (in the case of multicast) or recipients (in the case of broadcast) are from different mobile operators.

For example, solutions for forming a multicast cluster of user terminals, for allocation of resources (e.g. transmit power) enabling the exchange of the desired information and for a design of the feedback mechanisms between the recipients and the transmitter of the multicast type of information are known from T. Koskela, et.al, "Clustering Concept using Device-to-Device Communication in Cellular System", IEEE WCNC 2010 and J. Seppala, et.al, "Network Controlled Device-to-Device (D2D) and Cluster Multicast Concept for LTE and LTE-A Networks", IEEE WCNC 2011.

From *J. Seppala, et.al* a multicast concept is known for D2D communication integrated into a cellular network, including comparisons of throughput and delay for multicast D2D and conventional cellular modes, and a flexible mode for switching between multicast D2D and the conventional cellular mode ensuring service continuity. The essence of the suggested features is as follows. The network controls the resource allocation and transmission power of the D2D devices and is thus in full control of the interference caused by the D2D communication. The network also controls the cellular to D2D interference (and vice versa). With proper mode selection, the QoS and service continuity is guaranteed for D2D users. Feedback implosion, which occurs when a large number of users send feedback to the cluster head (i.e. sender), is considered and a solution is suggested.

Regarding the proper mode selection, the issue of mode selection is referenced in and known from 3GPP TR 22.803, "Feasibility Study for Proximity Services (ProSe), (Release 12)", V0.3.0, May, 2012. Herein, different users have different link qualities. The transfer rate for the users in the cluster can only be as high as the poorest link quality that a particular user allows for, e.g. if streaming video is sent with too high a transfer rate to a user with poor link quality, then a user with high quality radio channel would suffer from unacceptably long delays. For this reason, it is a challenging task to select the optimal transfer rate and to select between D2D multicast and the conventional cellular modes.

From *T. Koskela, et.al* a formation of clusters is known to improve the performance of a conventional cellular system. Herein the main challenge addressed is how to decide when a cluster of devices shall use D2D communications and when conventional cellular radio links will be used. The model is similar to that in *J. Seppala, et.al.* In particular D2D communications take place in uplink resources of the cellular system. Devices in the system may have three different communication modes: (1) continuous transmission and reception to/from the base station (BS); (2) cellular communication mode multicast transmission where one of the devices (the source) transmits to the BS and the other devices in the cluster receive a multicast transmission from the BS; and (3) D2D cluster communication mode multicast transmission where one of the devices transmit and other devices in the cluster receive. In *T. Koskela, et. al* the first communication mode comprises of devices that are not locally communicating and the second and third communication modes comprise locally communicating devices for which an optimal communication mode is sought.

System equations for the cluster are known from *J. Seppala, et. al* to identify when to switch between communication modes to maximize system capacity. In particular the following modes are evaluated: (1) all devices are in cellular mode; (2) opt D2D, wherein an optimized value for transmission powers is used based on a system of linear equations; (3) PL D2D, wherein the D2D cluster mode is selected if the path loss between source device and its serving BS is greater than any of the path losses between the source device and a destination device within the cluster; and (4) force D2D, wherein the D2D cluster mode is selected always for all the clusters.

From W. Yang, W. Sun, L. Li, "Reliable Multicasting for Device-to-Device Radio Underlaying Cellular Networks", Cornell University Library, http://arxiv.org/abs/1008.3741v2 a Leader in Charge (LiC) reliable multicast architecture is known for D2D radio underlaying cellular networks. In particular two kinds of transmissions are described: multicast from eNB (Evolved Node B, a base station in a LTE network) and intra-cluster retransmission. Packets are first multicast on the cellular links by the eNB. Next they are retransmitted in the cluster on D2D links until correctly received by all UEs (User Equipments). The eNB need not transmit until all UEs have received data packets correctly, but only until the cluster has all packets correctly. A leader in charge (LiC) is defined. The LiC is the UE that does most of the retransmissions using D2D links. The intuition is that since the LiC receives all the packets correctly it can recover the lost packets for all the non-leaders. Furthermore, an intra-cluster rescheduling algorithm is described to reschedule the retransmissions among the cluster UEs. The delay experienced by LiC can be reduced by introducing a delay threshold.

Procedures and algorithms for deciding a resource allocation for a D2D LTE (or other technology) communication between two terminals from different operators are known. Within a single operator's network, the radio resource management, cooperative features and feedback can be conducted within a single domain under which information for decision making is easily available. Furthermore procedures to switch between cellular and multicast D2D modes within a single network are known.

*Phan (*US 2011/0258327) relates to D2D communications considering different network operators. A database is disclosed storing registration information associating User Equipments (UEs) with cells under control of different network operators. In response to an inquiry from a first network operator that a first UE desires direct communications with a second UE, the registration information is used to coordinate between the first network operator and the second network operator to facilitate establishment of a direct communication link between the first UE and the second UE. In various embodiments the facilitating is enhancing the inquiry/page by adding a cell ID of the first UE's cell and adding pre-allocated radio resources in the first UE's cell for use by the second UE in responding to the page, and determining a single network which is not highly loaded and which can allocate resources for the D2D communications and directing one or both UEs to that single network

A solution for multi-operator broadcast or multicast D2D enabled communication is not known. Furthermore, if users (terminals) are under the management of different networks, then it is unknown how radio resources (i.e. spectrum) can be allocated for the broadcast or multicast D2D communication. This is because each network controls and is aware of its own radio resources, such as frequency/time/code allocations (i.e. packet scheduling), transmit power allocations and interference management. There is a need for a solution that enables multi-operator broadcast or multicast device-to-device communication.

SUMMARY OF THE INVENTION

It is an object of the invention to provide for a solution that enables device-to-device broadcasting or multicasting in a multi-operator or multi-network environment. Herein the term multi-operator or multi-network means that two or more of the devices involved in the broadcast or multicast communication may be connected via a wireless connection to different networks, e.g. due to having subscriptions at different operators. The term device-to-device communication means that the devices communicate the broadcasting or multicasting signals directly without using elements within the networks with the exception of possibly one or more base stations.

The object of the invention is achieved by the system, method, apparatuses and computer program product as defined in the appended independent claims. Preferred embodiments are described in the dependent claims.

BRIEF DESCRIPTION OF THE DRAWINGS

Aspects of the invention will be explained in greater detail by reference to exemplary embodiments shown in the drawings, in which:

Fig.1 shows a network architecture of an exemplary embodiment of the invention;
Fig.2 shows a network architecture of another exemplary embodiment of the invention;
Fig.3 shows a transmission and reception of a broadcast or multicast signal in time of an exemplary embodiment of the invention;
Fig.4 shows a transmission and reception of a broadcast or multicast signal in time of another exemplary embodiment of the invention;
Fig.5 shows a time-frequency resource allocation of an exemplary embodiment of the invention;
Fig.6 shows a time-frequency resource allocation of another exemplary embodiment of the invention;
Fig.7 shows a time-frequency resource allocation of another exemplary embodiment of the invention;
Fig.8 shows a transmission and reception of a broadcast or multicast signal in time of another exemplary embodiment of the invention;
Fig.9 shows a flow diagram for a decision logic of an exemplary embodiment of the invention;
Fig.10 shows a network architecture of another exemplary embodiment of the invention;
Fig.11 shows a network architecture of another exemplary embodiment of the invention;
Fig.12 shows a system of an exemplary embodiment of the invention;
Fig.13 shows a device of an exemplary embodiment of the invention;
Fig.14 shows a device of another exemplary embodiment of the invention; and
Fig.15 shows a flow diagram of steps performed in a system of an exemplary embodiment of the invention.

DETAILED DESCRIPTION OF THE DRAWINGS

The present invention provides a solution for multi-operator or multi-network device-to-device (D2D) multicast or broadcast communication. In the following examples the invention will be explained in more detail for multi-operator LTE D2D multicast or broadcast communication scenarios, but it will be understood that the invention is not limited to LTE D2D. Multicast or broadcast communication in general involving fixed or mobile devices from different networks and possibly from different operators communicating in accordance with any wireless standard, such as e.g. CDMA, GSM, GPRS, WCDMA, LTE, LTE Advanced, UMTS, UMB, IEEE 802.11, IEEE 802.16, IEEE 802.20, Bluetooth, Wi-Fi or WiMAX, are within the scope of the present invention. It is therefore to be understood that whenever LTE is used in an exemplary embodiment, the exemplary embodiment also applies to other wireless standards. In the following description the wording "device", "terminal" and "user equipment (UE)" are to be understood as synonyms of a fixed or mobile end-user device involved in the multicast or broadcast communication.

The present invention enables multi-operator broadcast and/or multicast in at least the following scenarios:

1) The device-to-device communication involving three or more terminals where the terminals are subscribed with two or more different networks, possibly of different operators, using different frequency bands.
2) The device-to-device communication being of broadcast type, i.e. one terminal broadcasts the same information towards a group of device-to-device terminals that are interested/subscribed to the information, in a one-to-many fashion. A terminal in this scenario may e.g. send local advertisement towards a group of terminals in its vicinity, send a file/photo/application towards a group of terminals in its vicinity, or be a machine type communications (MTC) terminal such as e.g. a parking meter that broadcast its availability and tariff towards nearby cars.
3) The device-to-device communication being of multicast type, i.e. a group of device-to-device terminals within device-to-device communication range communicate between themselves in a many-to-many fashion. A group of nearby terminals may e.g. engage in a social networking type of application sharing text, video, voice, and/or content, or engage in multi-player gaming session.

Recent Long Term Evolution (LTE) developments include the so-called Direct LTE or device-to-device (D2D) communication where the communication path between two LTE communication devices that are registered to the same LTE network operator is established directly or relayed via the nearby serving base station and not via the network. The present invention extends the LTE D2D concept and device-to-device communication in general towards a multi-operator multicast and broadcast type of communication, wherein devices that are registered to different network operators can broadcast or multicast in a device-to-device manner.

Within a single operator's LTE network, multicast and broadcast LTE D2D communication sessions typically use the frequency spectrum allocated to the operator. Resource management, mobility management, and session management are then conducted within a single domain in which information for making resource allocation decisions is readily available.

In cases where a group of terminals from different operators would like to engage in LTE D2D multicast or broadcast type of communications the necessary information for spectrum and resource allocation and configuration is preferably provided from their respective networks, which have capabilities to identify and track the involved mobile devices. Alternatively this information or part of this information is shared among the mobile devices without involving their respective networks.

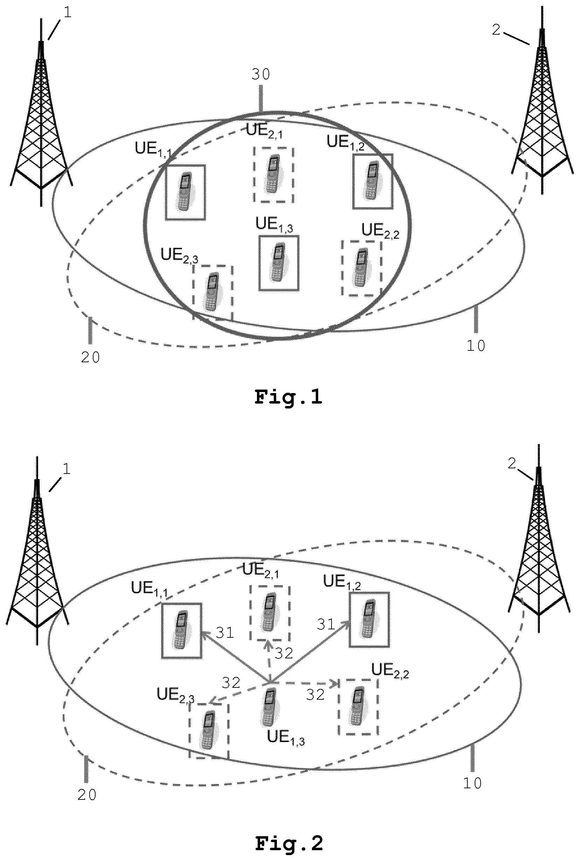

Fig.1 shows an example of a group of terminals from different operators 1,2 that form a local cluster 30 for device-to-device communication. The present invention assumes that it is known which terminals are in the local cluster 30. Terminals from different operators 1,2 may e.g. have formed the local cluster 30 by discovering their mutual presence via a multi-operator proximity discovery procedure as e.g. disclosed in the co-pending patent application of the applicant entitled "multi-network terminal-proximity discovery using joint spectrum" or any other method of forming a local cluster.

Within the local cluster 30 a first device, i.e. broadcasting terminal $UE_{1,3}$ in Fig. 1, intends to transmit a broadcast signal or a multicast signal to further devices, i.e. receiving terminals $UE_{1,1}$, $UE_{1,2}$, $UE_{2,1}$, $UE_{2,2}$ and $UE_{2,3}$ in Fig. 1. Generally one or more of the first device and the further devices may be connected to a network via a wireless connection or via a wired connection. The network may be operated by an operator. It is possible that one or more of the devices is not connected to a network, in which case the device operates in an ad-hoc mode wherein direct communication with another device is possible without involvement of a network of e.g. an operator. The devices in the local cluster have wireless communication possibilities for the device-to-device broadcasting or multicasting of the signal.

The local cluster 30 in Fig. 1 contains six terminals from two networks 1 and 2 that may be operated by one or two operators or any other party. The first network 1 covers a geographical area 10 and the second network 2 covers a geographical area 20. In an LTE network areas 10 and 20 are typically cells covered by a base station in the LTE network. The terminals of users subscribed to (or served by) the first network 1 are $UE_{1,1}$, $UE_{1,2}$, and $UE_{1,3}$ while the terminals of users subscribed to (or served by) the second network 2 are $UE_{2,1}$, $UE_{2,2}$ and $UE_{2,3}$. Because the local cluster 30 is formed for D2D communication purposes, the local cluster 30 contains pairs of terminals that are within a D2D communication range.

The definitions of device-to-device broadcasting and multicasting in a local cluster as shown in Fig.1 differ from the generally known definitions of broadcasting and multicasting.

A broadcast D2D communication within a local cluster means that one particular terminal is a fixed broadcaster and transmits the same information towards other terminals in the local cluster. The fixed broadcaster is the terminal transmitting/broadcasting the information and does not change until the D2D communication session is terminated.

A multicast D2D communication within a local cluster means that one terminal from the group of terminals in the local cluster is a temporary broadcaster and transmits the same information towards other terminals in the local cluster. The broadcaster is temporary and dynamically changes (i.e. in time different terminals from different networks can be broadcaster) until the D2D communication session is terminated.

In the following exemplary embodiment three or more LTE D2D enabled terminals are subscribed to at least two different operators that operate LTE D2D enabled networks in different frequency bands. These terminals form a local cluster and would like to engage in a broadcast type of D2D communications. It is to be understood that the D2D enabled terminals may alternatively be subscribed to at least two different networks that may be operated by one or more operators or any other party. As described above the invention is not limited to LTE.

Three broadcast scenarios will be described for different use of available spectrum bands.

In a first broadcast scenario, which covers two sub-scenarios, spectrum hopping is used. In this scenario the broadcaster, i.e. one of the terminals in the local cluster, hops among available frequency bands allocated to the different operators serving the terminals in the local D2D cluster in a pre-defined hopping sequence determined by the amount of time/resources spent on each operator's spectrum.

In a first sub-scenario of the first broadcast scenario receiving terminals listen on their respective frequency bands as allocated to their serving operator. The broadcaster hops over the operators' frequency bands and the receiving terminals receive the broadcasted information in a portion of the time duration of the broadcast session, namely during a portion when broadcasting takes place on the frequency band allocated to the serving operator of the receiving terminal.

In a second sub-scenario of the first broadcast scenario receiving terminals hop along in a synchronous manner with the broadcaster over the (different) operators' frequency bands and therefore may continuously receive the broadcasted information.

In a second broadcast scenario spectrum selection is used. The broadcast terminal including receiving terminals select one of the available operator spectrums for the broadcast session.

In a third scenario, which is similar to the second scenario, the terminals select a commonly available radio access technology (RAT) to be used in a joint spectrum band outside of the available spectrum bands owned by the operators.

In the following sections the three broadcast scenarios are explained in more detail.

First broadcast scenario: spectrum hopping

With reference to Fig. 1, in this example terminal $UE_{1,3}$ subscribed at the first operator 1 would like to share/broadcast information towards other terminals in the local cluster 30. A pre-defined spectrum hopping sequence is used that uses available spectrum bands from the operators serving the UEs involved in the local broadcast cluster. Hereto, in a local broadcast session initiation the broadcaster $UE_{1,3}$ and targeted local UEs that are to receive the broadcasted information agree on the spectrum hopping sequence, which may e.g. be based on:

> 1) The number of UEs per operator. The higher the number of UEs from a particular operator the longer the time this operator's spectrum may be used. For example, assume in total 10 terminals are receiving the broadcasted information where 9 terminals are from operator A and 1 terminal is from operator B. Then, the transmitting UE (the 11th one) may use 9/10 of its broadcasted time the spectrum of operator A and correspondingly 1/10 of its broadcast time the spectrum of operator B.
> 2) The amount of available frequency/time resources per operator available for this local D2D broadcast session.
> 3) A weighted combination of 1) and 2) above, depending on whether the goal is fairness in e.g. spectrum usage or balanced utilization of spectrum resources at the different operators.

The invention is not limited to the example above, i.e. any other criteria for defining the hopping sequence may be used.

After the selection and configuration of the spectrum hopping sequence (e.g. signaling the agreed hopping sequence to the terminals in the local cluster and configuring their respective networks), the broadcaster $UE_{1,3}$ hops among the portions of spectrum bands from the different operators as e.g. illustrated in Fig.2. Similar to Fig. 1, in Fig.2 the local broadcast cluster is formed from UEs that are subscribed to two different operators 1 and 2 covering areas 10 and 20, respectively. The solid arrows 31 from $UE_{1,3}$ to $UE_{1,1}$ and $UE_{1,2}$ indicate a broadcast transmission using a portion of the spectrum band of the first operator 1. The dashed arrows 32 from $UE_{1,3}$ to $UE_{2,3}$, $UE_{2,1}$ and $UE_{2,2}$ indicate a broadcast transmission using a portion of the spectrum band of the second operator 2.

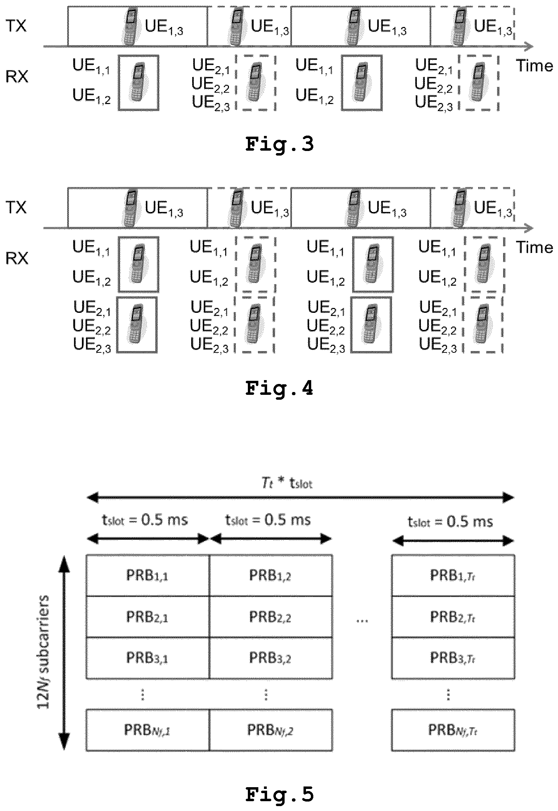

The broadcast $UE_{1,3}$ may transmits the same information on each operator's spectrum portion while receiving UEs listen to their respective operating spectrum bands at time slots as agreed with the hopping sequence as illustrated in Fig.2 and Fig.3.

The broadcast $UE_{1,3}$ may alternatively transmit different information on each operator's spectrum portion while receiving UEs listen to two or more operating spectrum bands at time slots as agreed with the hopping sequence as illustrated in Fig.4. This is not illustrated in Fig.2

In Fig.3 and Fig.4 parts of the broadcast signal from the transmitter (TX), i.e. $UE_{1,3}$, are indicated as either solid line blocks where the broadcast transmission uses a portion of the spectrum band of the first operator or as dashed line blocks where the broadcast transmission uses a portion of the spectrum band of the second operator. The broadcast signals at the receivers (RX), i.e. $UE_{1,1}$, $UE_{1,2}$, $UE_{2,1}$, $UE_{2,2}$ and $UE_{2,3}$, are received in portions of the spectrum band of the first operator as indicated by solid line blocks and/or in portions of the spectrum band of the second operator as indicated by dashed line blocks.

The switching between the first and second frequency as illustrated in Fig.3 and Fig.4 is to be appropriately managed, based e.g. on the broadcasted service. At switching occasions there may be a transition time needed to enable the broadcaster $UE_{1,3}$ to tune its transmitter from one frequency to another frequency. A frequent switching among the available frequencies may introduce overhead in terms of additional transition time intervals. On the other hand, less frequent switching (especially in the example of Fig.3) might introduce excessive delay between two consecutive receptions of the broadcasted info, which for some services (e.g. voice broadcast) may be unacceptable.

The first broadcast scenario may be implemented as follows in LTE. For example, in LTE the uplink resources are typically allocated to users/terminals using consecutive physical resource blocks (PRBs). A single PRB represents a minimum time/frequency slot that is allocated to a user/terminal. Each PRB typically consists of twelve subcarriers and a time slot of 0.5 ms on which data is embedded. The total number of available PRBs in an LTE network depends on the amount of bandwidth available to the operator.

A typical uplink LTE transmission where the user is allocated $N_f$ consecutive PRBs (therefore having $12*N_f$ subcarriers) for $T_t$ number of timeslots is illustrated in Fig.5.

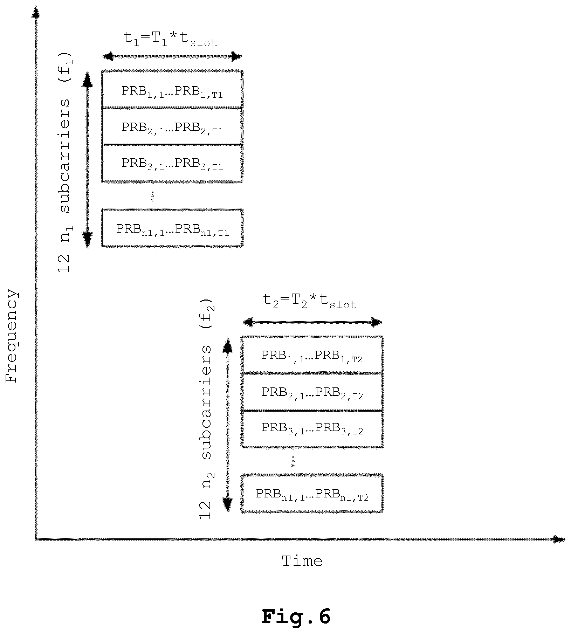

In the case of the frequency hopping scenario, the broadcaster transmits data using resources (i.e. timeslots and frequencies in this example) allocated by two or more networks. In the example of Fig.3, the broadcasting UE transmits the same information in the resources allocated by the networks 1 and 2, while in the example of Fig.4 different information is transmitted and received by UEs belonging to both networks 1 and 2. A generic example of implementing the spectrum hopping scenario is shown in Fig.6.

In the example of Fig.6 the broadcasting UE

has $n_1$ PRBs during $T_1$ time slots (of 0.5 ms each) allocated to it by the first LTE network and $n_2$ PRBs during $T_2$ time slots (of 0.5 ms each) allocated to it by the second LTE network.

In the example of Fig.3 the same information may thus be transmitted in each of the operator's allocated frequency resources while for the example of Fig.4 the broadcasting UE may transmit different information as the receiving UEs hop along with the broadcasting UE.

For both examples of Fig.3 and Fig.4 the following information may be signaled to the broadcasting UE:

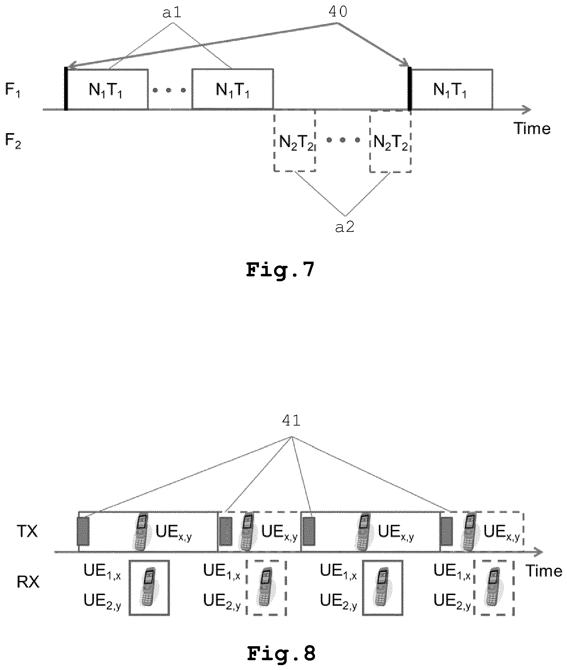

(i) The PRBs (i.e. which block PRBs) and the time period $T_1$ allocated from the first LTE network;
(ii) The PRBs (i.e. which block PRBs) and the time period $T_2$ allocated from the second LTE network; and
(iii) Timing information regarding the usage of network's resources from the first and second LTE network in a form of a hopping cycle (see also Fig.7).

In the example of Fig.3 the information (i) and (ii) above may be signaled to the receiving UEs from the 1st and 2nd operator/LTE network, respectively. This enables the receiving UEs to tune and listen to the correct block of PRBs for the correct amount of time. Further, the timing information (iii) may be signaled to receiving UEs from the 1st and 2nd operator/LTE network as this timing information may be used for the UEs to activate their receivers (e.g. transfer from idle to listening mode) as the broadcasting UE transmits the information via the allocated resources on the 1st and 2nd LTE network.

In the example of Fig.4 the same information (i), (ii), and (iii) may be signaled to both the broadcasting and the receiving UEs.

The spectrum hopping principle explained above and illustrated in Fig.6 may be extended to have a parallel transmission at the same time via the resources from different networks, i.e. the transmissions shown in Fig.6 may overlap in time. In LTE networks this is possible if the terminals and networks support 'carrier aggregation' as for example specified for carrier aggregation in the 3GPP LTE-Advanced standard from Release 10 onwards.

The time allocation $T_1$ or $T_2$ in Fig.6 may be related with the system time frame structure in LTE (or other wireless systems such as UMTS, GSM, WLAN, etc). For example, in LTE the smallest resource allocation in the time domain is one sub-frame of 1 ms (or two consecutive time slots), while one radio frame is with duration of 10 ms (or ten sub-frames). Therefore, in case of LTE $T_1$ and $T_2$ in Fig.6 denote the resource allocation in the 1st and 2nd LTE network within one radio frame of 10 ms.

Fig.7 shows an example of a repetition of use of radio resources in one LTE network before switching to radio resources in another LTE network. Repetitions are denoted in Fig.7 with $a_1$ and $a_2$ and relate to the multiple of radio time frames of 10 ms. The different frequencies are illustrated by solid line blocks and dashed line blocks and further identified by $F_1$ and $F_2$. The hopping cycle boundaries in time are indicated by the arrows 40.

Although not shown in Fig.7, it is possible to switch between frequencies within one radio frame of 10 ms.

Second broadcast scenario: spectrum selection

In the second broadcast scenario the broadcaster D2D terminal and the receiving D2D terminals in the cluster select one spectrum band from the different spectrum bands available at the different operators and that is supported by the members of the local broadcasting cluster.

The selection as to which operator's band to perform the broadcast may be based upon the number of participating users per operator. For example, the frequency band of the operator having most users involved in the local broadcast may be selected as the operator's band to perform the broadcast.

Alternatively the selection may be based upon supporting frequency bands of the user terminals in the local broadcast, i.e. based on the terminal capabilities for spectrum bands and matching them with the available operators' spectrum bands.

Alternatively the selection may be based upon the radio propagation and traffic conditions per individual operator. For example, based on interference conditions, resource availability and path-loss per individual operator band, a group decision may be made according to predefined criteria (i.e. as governed by external policies). These criteria could e.g. be based on selecting the band with minimum interference, maximum resources available and/or smallest path-loss.

Third broadcast scenario: RAT and joint spectrum selection

In the third broadcast scenario the broadcaster D2D terminal and the receiving D2D terminals in the cluster decide on selecting a spectrum and a RAT (e.g. LTE, WLAN, Bluetooth, etc.) based on the terminal capabilities and propagation conditions between the broadcaster and the receiving terminals. This is different from the second broadcast scenario with respect to selecting another spectrum and/or possibly another radio access technology than selecting one of the operator's spectrum and/or radio access technology.

The configuration parameters regarding which spectrum and/or RAT to use are distributed among the users in the local broadcast cluster via their respective networks. Typically this includes an inventory step where the broadcaster and receiving terminals in the local broadcast cluster make an inventory of which spectrum and RAT can be jointly used and a decision step where the broadcaster and receiving terminals select one of the possible combinations (spectrum and RAT), if applicable, based on some probing/hand-shaking procedure.

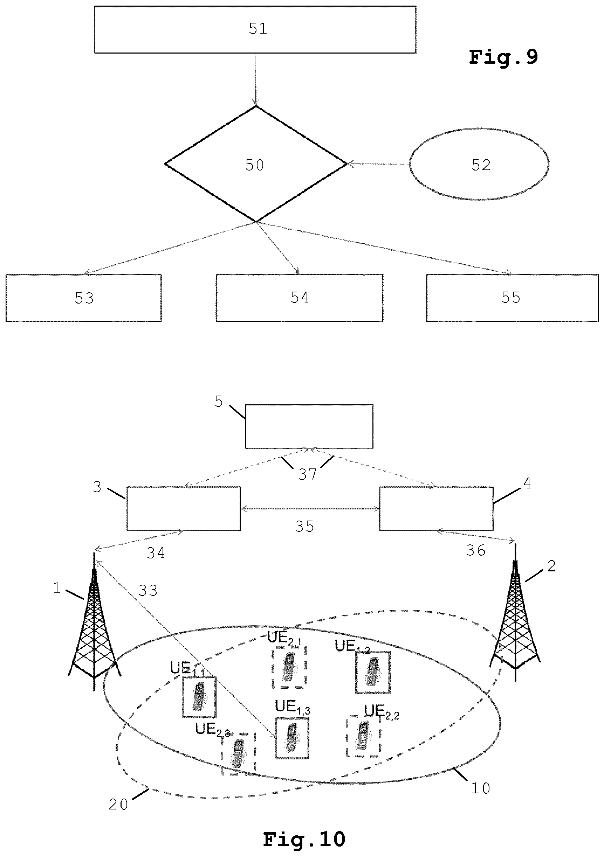

The probing/hand-shaking procedure may be implemented by a short-term local broadcast of probing/pilot signals on the specific spectrum and RAT combinations and collecting the feedback from the receiving terminals involved in the local broadcast. When the available options are tested the broadcaster UE or an external system (see also Fig.9) can make a decision (based on the feedback from the receiving terminals in the local broadcast cluster) and communicate the selected configuration towards the involved mobile terminals via their respective networks.

The three broadcast scenarios described above are applicable to multicast communications with minor modifications.

An example of a spectrum hopping solution for a multicast type of communication within a local multi-operator D2D cluster is illustrated in Fig.8. In Fig.8 the terminals are indicated by $UE_{x,y}$, x indicating an operator and y indicating a terminal from the operator. When comparing Fig.8 with Fig.3, x may be 1 or 2 and y may be 1, 2 or 3.

The multicast spectrum hopping solution shown in Fig.8 is similar to the broadcast spectrum hopping solution of Fig.3 with the following modifications. The configuration of the multicast hopping sequence (e.g. time/amount of operator's spectrum used) takes into account that any terminal within the local D2D cluster can be a broadcaster instead of having a single/fixed broadcaster as in the broadcast scenario. Illustrated in Fig.8 by arrows 41, at the beginning of each spectrum usage it may be decided (e.g. via signaling, medium sensing or handshaking) which of the UEs will be transmitting a signal. This may also depend on the activity. For example, if $UE_{1,3}$ is currently active it may indicate (e.g. via signaling) that it will be active in the successive period(s) of spectrum usage then the decision about who is transmitting in the next period may be skipped until $UE_{1,3}$ is active or some other participant in the multicast session becomes active.

Spectrum selection for multicasting is similar to the second broadcast scenario. At the beginning of a multicast session involving D2D terminals from different operators, a decision may be made as to which of the available spectrum bands of the different operators is used for D2D communication. The decision as to which D2D terminal transmits during the multicast session may be made at the beginning of a transmission time-slot in a similar manner as shown in Fig.8. The transmission takes place on the chosen spectrum band, which is assumed to be supported by the members of the local broadcasting cluster.

RAT selection for multicasting is similar to the third broadcast scenario. At the beginning of the multicast session the D2D terminals in the local cluster make an inventory of which spectrum/RATs can be jointly used. Thereafter, a decision may be made as to which spectrum/RAT to use. During the multicast session, the decision as to which D2D terminals may be made at the beginning of each transmission slot in a similar manner as shown in Fig.8.

For deciding which frequency spectrum to use and how this spectrum is used at the initiation of the broadcast or multicast session, a decision procedure as illustrated in Fig.9 may be used. The decision procedure is typically a part of a system for enabling the device-to-device broadcasting or multicasting of a signal. The system may reside in the network of an involved network, at an independent D2D broadcast entity outside of the involved networks or be a part of one of the devices in the local cluster.

Input 51 to the decision procedure 50 are radio capability data and further data that may be stored in a memory and which are used for making the decision. The radio capability data includes e.g. an indication of available/usable frequency bands at the networks of the UEs and at the UEs and/or available/usable RATs at the UEs. The further data includes e.g. an indication of the number of UEs involved in the local broadcast cluster per network, information about the traffic level and interference level per network, propagation conditions per network (e.g. different frequency bands) and/or any other relevant data. Output 53, 54, 55 of the decision procedure may be a selection of one of the three broadcast scenarios as described above and configuration data for configuring the UEs accordingly.

The decision logic 50, which may partly or completely be implemented as a software program running on a processor, may be programmed to use policies 52 and/or criteria, examples of which are a fair use of spectrum based on the number of UEs per network in the local broadcast cluster, an efficient use of spectrum based on traffic, interference and/or propagation conditions, and avoiding or minimizing usage of licensed spectrum by offloading the local broadcast sessions towards different unlicensed spectrum and possibly different radio technology (e.g. LTE, WLAN, Bluetooth, and etcetera).

It is possible that the input data 51 to the decision logic 50 is periodically received, enabling the decision logic 50 to dynamically switch between broadcast scenarios 53,54,55 based on the input conditions and the policies/criteria.

The system with the decision logic 50 may use input data 51 that is at least partly received from different networks, e.g. the networks to which the terminals in the local cluster are connected by subscription. Alternatively, at least a part of the input data is received directly from one or more of the devices in the local cluster 30. If the input data 51 resides in individual network domains, it may be shared or made available to the system with the decision logic 50. Fig.10 shows examples of how the input data 51 can be made available and shared among the involved networks 1 and 2. In Fig.10 $UE_{1,3}$ initiates a local broadcast session in a local cluster. $UE_{1,1}$, $UE_{1,2}$ and $UE_{1,3}$ are from the first network 1, while $UE_{2,1}$, $UE_{2,2}$,

and UE$_{2,3}$ are from the second network 2. UE$_{1,3}$ announces the broadcast to its serving network 1, typically via its currently serving cell / base station. Neighboring terminals UE$_{1,1}$, UE$_{1,2}$, UE$_{2,1}$, UE$_{2,2}$, and UE$_{2,3}$ within the predefined local cluster are to receive the broadcast.

In this example UE$_{1,3}$ communicates a broadcast initiation request together with an indication of its location, such as an identity of the serving cell at the first network, via the radio interface 33 and network interface 34 to the first network 1. Using a broadcast initiation message the first network 1 may retrieve information, e.g. including an indication of their respective serving networks, about the other terminals in the local cluster. Hereto the first network 1 communicates with the other networks 2 serving the mobile terminals that will receive the D2D broadcast information from UE$_{1,3}$. Communication from the first network 1 to the other networks 2 may e.g. be a direct communication as indicated by interface 35 or an indirect communication via an independent D2D broadcast entity 5 as indicated by interface 37. In the first case the system with the decision logic 50 typically resides at the first network 1, while in the latter case the system with the decision logic 50 typically resides at the independent D2D broadcast entity 5.

With a direct communication 35, one of the networks, e.g. the first network 1 of the broadcasting D2D terminal UE$_{1,3}$, may request relevant information from the networks 2 of the other D2D terminals, e.g. via an existing inter-operator communication interface. The relevant information to be used as input data 51 to the system with the decision logic 50 may be fed back to the first network 1 if the system is hosted there, typically via the same inter-operator communication interface. The system at the first network 1 then makes a decision using the decision logic 50 about the amount of and which radio resources will be used for the D2D broadcast session, and optionally informs the other networks 2.

An indirect communication 37 using a separate, possibly independent entity 5 residing external to the networks 1 and 2 advantageously enables collection of information from the different networks 1 and 2, such as how many mobile terminals are involved in the broadcast D2D session, what is the load in the serving cells 10,20 at respective networks 1,2 that cover the mobile terminals engaged in the D2D local broadcast session, what is the capacity and available resources at the serving cell 10,20 for the respective networks 1,2, and etcetera. The independent entity 5 may host a system with the decision logic 50 and may use the information as input data 51 to the decision logic 50 such as e.g. shown in Fig.10 and inform the individual networks 1,2 about the amount of and which radio resources will be used for the D2D broadcast session.

The system with the decision logic 50 may be used to decide the structure of a hopping sequence for use in e.g. the first broadcast scenario and/or similar multicast scenario. A policy 52 may be used with the decision logic 50 to define the hopping sequence. The policy 52 is typically agreed upon by the networks 1,2 that serve the mobile terminals engaged in the local broadcast cluster.

As shown in the examples of Fig.3, Fig.4, Fig.8 and Fig.7, the hopping cycle specifies how often the broadcaster may use the spectrum $F_1$ or $F_2$ from the first network 1 or the second network 2, respectively. It will be understood that the shown examples are easily extendable to 3 or more networks. In the following example, which is based on the examples of Fig.5 and Fig.6, based on the current system conditions at the first network 1, e.g. of a first operator, it has been decided to use $N_1$ PRBs during $T_1$ time-slots, i.e. the total amount of allocated resources at the first network 1 is $N_{t^*2}$ Consequently, it has been decided to use $N_2$ PRBs during $T_2$ time-slots at the second network 2, e.g. of a second operator. Thus, the total amount of allocated resources at the second network is $N_2{}^*T_2$. Further, assume that within one hopping cycle the resources of the first network 1 are used $a_1$ times, while the resources of the second network 2 are used $a_2$ times, as illustrated in Fig.7.

The optional and exemplary policies 52 that may control the structure of the hopping cycle illustrated in Fig.7 may be as follows:

a) First policy: simply use the available spectrum at the first network 1 and the second network 2 without additional restrictions. As a consequence, $a_1$ and $a_2$ are equal.
b) Alternative second policy: use the available spectrum at the first network 1 and the second network 2 according to the ratio of number of users $NU_1$ and $NU_2$ served by these networks 1 and 2, respectively. The following equation then applies:

$$[a_1{}^*(N_1{}^*T_1)] \, / \, [a_2{}^*(N_2{}^*T_2)] = NU_1/NU_2$$

c) Any other policy.

The following are two examples according to the second policy for calculating the repetition count a1 and a2 in the hopping cycle:

1) if $N_1{}^*T_1=2(N_2{}^*T_2)$ and $NU_1=4{}^*NU_2$ then $a_1=2{}^*a_2$
2) if $N_1{}^*T_1=N_2{}^*T_2$ and $NU_1=NU_2$ then $a_1=a_2$

The D2D terminals involved in the broadcast or multicast, i.e. the broadcasting terminal and the receiving terminals in the local cluster, are typically configured using configuration data received from the system with the decision logic 50. The configuration data contains e.g. the hopping sequence and/or the RAT/spectrum to use. When a decision on these aspects has been made at the beginning of the D2D broadcast session, they are communicated to the respective D2D terminals of the different networks 1,2.

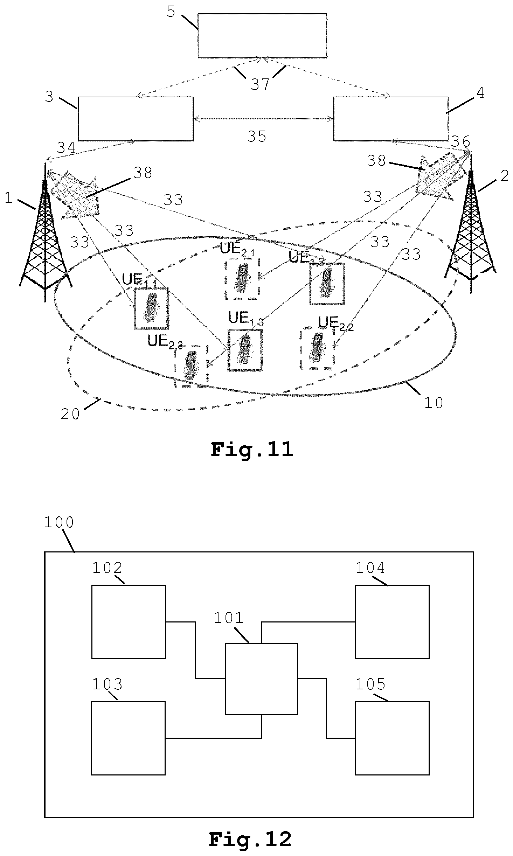

Signaling options for communicating the hopping sequence to the mobile terminals within the D2D broadcast cluster are illustrated in Fig.11. Fig.11 shows similar elements as shown in Fig.10, with the addition of arrows indicating further signaling.

The origin of the configuration data is typically the system with the decision logic 50, which may be located at one of the networks 1,2 (e.g. the first network 1 of a first operator owning the initiator of the D2D broadcast or multicast session) or at the independent D2D (broadcast) entity 5. Alternatively (not shown in Fig. 11) the system with the decision logic 50 may be located in one of the terminals such as the initiator of the D2D broadcast or multicast session.

The configuration data may be signaled to the mobile terminals via their respective serving cells/networks, typically via one of the following signaling channels:

(i) From the serving cell of the involved D2D terminals via a broadcast type of DL signaling channel. This is illustrated with the dashed block-arrows 38 in Figure 11. For example, the system information block (SIB) in the broadcast channel of the respective networks 1,2 may contain the IDs of the mobile terminals that are recipients of the D2D broadcast session, including a description of the hopping sequence.

(ii) Via individual point-to-point signaling sessions between the mobile terminals engaged in the D2D broadcast session and their respective serving cells. This is illustrated with the solid lines 33 in Figure 11. For example, the serving network may initiate signaling session with the individual mobile terminals and signal the description of the hopping sequence.

Fig.12 shows an exemplary embodiment of a system 100 for enabling device-to-device broadcasting or multicasting of a signal. The system 100 contains decision logic 50 as illustrated in Fig.7, which is typically implemented as a software program running on a processor 101. The processor 101 uses a memory 102 wherein the radio capacity data and further data may be stored for the selection of the frequency band(s) and/or RAT to be used for the D2D broadcasting or multicasting of the signal in the local cluster 30.

As explained in the exemplary embodiments above, the configuration data may contain an indication of the selected frequency band(s) and/or RAT and the further data may contain for each network an indication of a number of devices involved in the device-to-device broadcasting or multicasting of the signal in the local cluster, for each network an indication of a traffic level and/or interference level for the devices involved in the device-to-device broadcasting or multicasting of the signal in the local cluster, and/or for each network an indication of propagation conditions for the devices involved in the device-to-device broadcasting or multicasting of the signal in the local cluster.

A transmitter 103 may be used to transmit configuration data to the devices in the local cluster 30 for configuring the devices and thereby enable the device-to-device broadcasting or multicasting of the signal. Herein, the configuration data contains an indication of the selected frequency band(s) and/or RAT to be used for the broadcasting or multicasting.

Optionally a first receiver 104 may be used for receiving the further data from a network node in the respective networks. Optionally a second receiver 105 may be used for receiving the further data directly from the devices in the local cluster. The first receiver 104 and the second receiver 105 may be implemented as a single receiver.

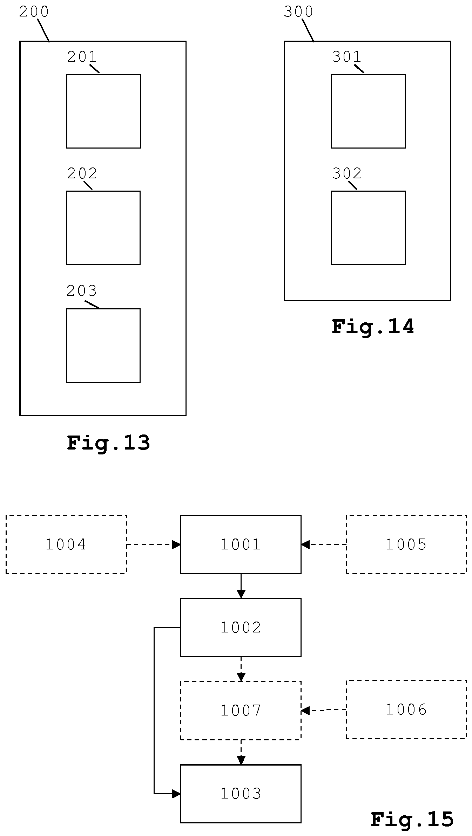

Fig. 13 shows an exemplary embodiment of a device 200 for transmitting a broadcast or multicast signal. The device 200 contains a first receiver 201 for receiving the configuration data from a system 100 as e.g. shown in Fig.12. With the configuration data the device 200 is configured to transmit the device-to-device broadcast or multicast signal to the receiving devices in the local cluster. Transmitter 202 is used for this transmission. A second receiver 203 may be used to receive at least a part of radio capability data directly from one or more of the receiving devices in the local cluster. The thus received radio capability data may be used for the configuration of the device 200. The receiving devices typically broadcast their radio capabilities in a further broadcast signal that is transmitter prior to the configuration of the devices and the device-to-device broadcasting or multicasting of the signal. The first receiver 201 and the second receiver 203 may be implemented as a single receiver.

Fig.14 shows an exemplary embodiment of a device 300 for receiving a broadcast or multicast signal. The device 300 contains a first receiver 301 for receiving the configuration data from a system 100 as e.g. shown in Fig.12. With the configuration data the device 300 is configured to receive the device-to-device broadcast or multicast in the local cluster. A second receiver 302 may be used to receive the device-to-device broadcast or multicast of the signal. The first receiver 301 and the second receiver 302 may be implemented as a single receiver.

Fig.15 shows a flow diagram of steps that may be performed by a system as e.g. shown in Fig.12. In step 1001 the radio capability data is stored in the memory 102. In step 1002 the processor 101 selects the frequency band(s) and/or RAT based on the radio capability data. In step 1003 the confirmation data with the indication of the selected frequency band(s) and/or RAT is transmitted to the devices in the local cluster.

Optionally, at least a part of the radio capability data may be received in step 1004 from a network node in the respective networks. Optionally, at least a part of the radio capability data may be received in step 1005 directly from the devices in the local cluster.

Optionally, in step 1006 further data as described above is stored in the memory 102 and in step 1007 an amount of radio resources to be used in the frequency band(s) and/or RAT is calculated based on the further data. An indication of the calculated amount of resources may be added to the configuration data for transmission to the devices in step 1003.

One embodiment of the invention may be implemented as a program product for use with a computer system. The program(s) of the program product define functions of the embodiments (including the methods described herein) and can be contained on a variety of non-transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored.

## Claims

1. A system (100) for enabling device-to-device broadcasting or multicasting of a signal from a first device ($UE_{1,3}$) to two or more further devices ($UE_{1,1}, UE_{1,2}, UE_{2,1}, UE_{2,2}, UE_{2,3}$), the system (100) comprising:

   a memory (102) configured to store radio capability data comprising for each of the first device and the two or more further devices an indication of an available frequency band;
   a processor (101) configured to select, based on the radio capability data, two or more frequency bands to be used for the device-to-device broadcasting or multicasting of the signal; and
   a transmitter (103) configured to transmit configuration data to the first device and to the two or more further devices, the configuration data comprising an indication of the selected two or more frequency bands.

2. The system (100) according to claim 1, wherein the first device is configured to be connected via a first wireless connection to a first network (1) and wherein at least one of the two or more further devices is configured to be connected via a second wireless connection to a second network (2) different from the first network, and wherein the transmitter (103) is configured to transmit the configuration data to the first device via the first network (1) and to transmit the configuration data to the two or more further devices of which to the at least one of the two or more further devices via the second network (2).

3. The system (100) according to claim 2, further comprising a first receiver (104) configured to receive at least a first part of the radio capability data for the first device from a first network node in the first network (1) and for the at least one of the two or more further devices from a second network node in the second network (2).

4. The system (100) according to any one of the preceding claims, further comprising a second receiver (105) configured to receive at least a second part of the radio capability data for the two or more further devices from the two or more further devices in a further broadcast signal.

5. The system (100) according to any one of the preceding claims, wherein the memory (102) is further configured to store further data comprising one or more of:

   for at least one of the first and second network (1,2) an indication of a number of devices involved in the device-to-device broadcasting or multicasting of the signal from the first device to the two or more further devices;
   for at least one of the first and second network (1,2) an indication of a traffic level and/or interference level for the devices involved in the device-to-device broadcasting or multicasting of the signal from the first device to the two or more further devices; and
   for at least one of the first and second network (1,2) an indication of propagation conditions for the devices involved in the device-to-device broadcasting or multicasting of the signal from the first device to the two or more further devices,

   wherein the processor (101) is further configured to calculate, based on the further data, an amount of radio resources to be used in the two or more frequency bands,
   and wherein the configuration data further comprises an indication of the calculated amount of radio resources.

6. The system (100) according to claim 5, wherein the indication of the calculated amount of radio resource comprises a spectrum hopping sequence defining when the amount of radio resources are to be used in time.

7. The system (100) according to claim 1, wherein the configuration data further comprises an indication of:

   a selected radio access technology;
   an amount of radio resources; and/or

a spectrum hopping sequence defining when the amount of radio resources are used in time.

8. A device (200,$UE_{1,3}$) for transmitting a device-to-device broadcast or multicast signal to two or more further devices ($UE_{1,1}$,$UE_{1,2}$,$UE_{2,1}$,$UE_{2,2}$,$UE_{2,3}$), wherein the device (200,$UE_{1,3}$) is configured to be connected via a first wireless connection to a first network (1) and wherein at least one of the two or more further devices is configured to be connected via a second wireless connection to a second network (2) different from the first network, the device (200,$UE_{1,3}$) comprising:

    a first receiver (201) configured to receive from a system (100) according to any one of the claims 1-6 configuration data;
    the configuration data comprising an indication of two or more frequency bands; and
    a transmitter (202) configured to transmit the device-to-device broadcast or multicast signal on two or more of the frequency bands based on the configuration data.

9. The device (200,$UE_{1,3}$) according to claim 8, further comprising a second receiver (203) configured to receive at least a part of radio capability data for the at least one of the two or more further devices from the at least one of the two or more further devices in a further broadcast signal, and wherein the transmitter (202) is further configured based on the radio capability data.

10. The device (200,$UE_{1,3}$) according to claim 8 or claim 9, wherein the configuration data further comprises an indication of an amount of radio resources and/or a spectrum hopping sequence defining when the amount of radio resources are used in time.

11. The device (200,$UE_{1,3}$) according to any one of the claims 8-10, wherein the transmitter (202) is configured to transmit a same data part of the device-to-device broadcast or multicast signal on at least a first of the frequency bands and a second of the frequency bands.

12. The device (200,$UE_{1,3}$) according to any one of the claims 8-11, wherein the transmitter (2020) is configured to transmit different data parts of the device-to-device broadcast or multicast signal on the two or more of the frequency bands.

13. A device (300,$UE_{1,1}$,$UE_{1,2}$,$UE_{2,1}$,$UE_{2,2}$,$UE_{2,3}$) for receiving a device-to-device broadcast or multicast signal, wherein the device is configured to be connected via a wireless connection to a network (1,2), the device comprising:

    a first receiver (301) configured to receive from a system (100) according to any one of the claims 1-6 configuration data;
    the configuration data comprising an indication of two or more frequency bands; and
    a second receiver (302) configured to receive the device-to-device broadcast or multicast signal on two or more of the frequency bands based on the configuration data.

14. The device according to claim 13, wherein the configuration data further comprises an indication of an amount of radio resources and/or a spectrum hopping sequence defining when the amount of radio resources are used in time.

15. A method for enabling device-to-device broadcasting or multicasting of a signal from a first device ($UE_{1,3}$) to two or more further devices ($UE_{1,1}$,$UE_{1,2}$,$UE_{2,1}$,$UE_{2,2}$,$UE_{2,3}$), the method comprising:
    storing (1001) radio capability data comprising for each of the first device and the two or more further devices an indication of an available frequency band:

    selecting (1002), based on the radio capability data, two or more frequency bands to be used for the device-to-device broadcasting or multicasting of the signal; and
    transmitting (1003) configuration data to the first device and to the two or more further devices, the configuration data comprising an indication of the selected two or more frequency bands.

16. The method according to claim 15, wherein the first device is configured to be connected via a first wireless connection to a first network (1) and wherein at least one of the two or more further devices is configured to be connected via a second wireless connection to a second network (2) different from the first network, the method further comprising receiving (1004) at least a part of the radio capability data for the first device from a first network node in the first network (1) and for the at least one of the two or more further devices from a second network node in the second network (2).

17. The method according to claim 15 or claim 16, further comprising receiving (1005) at least a second part of the radio capability data for the two or more further devices from the two or more further devices in a further broadcast signal.

18. The method according to any one of the claims 15-17, further comprising

    storing (1006) further data comprising one or more of:

for at least one of the first and second network (1,2) an indication of a number of devices involved in the device-to-device broadcasting or multicasting of the signal from the first device to the two or more further devices;

for at least one of the first and second network (1,2) an indication of a traffic level and/or interference level for the devices involved in the device-to-device broadcasting or multicasting of the signal from the first device to the two or more further devices; and

for at least one of the first and second network (1,2) an indication of propagation conditions for the devices involved in the device-to-device broadcasting or multicasting of the signal from the first device to the two or more further devices, and

calculating (1007), based on the further data, an amount of radio resources to be used in the two or more frequency bands,

and wherein the configuration data further comprises an indication of the calculated amount of radio resources and/or a spectrum hopping sequence defining when the amount of radio resources are used in time.

19. A computer program product, which, when being executed by a processor (101), is adapted to perform the method according to any one of the claims 15-18.

**Patentansprüche**

1. System (100) zum Ermöglichen von Vorrichtung-zu-Vorrichtung-Broadcasting oder -Multicasting eines Signals von einer ersten Vorrichtung ($UE_{1,3}$) zu zwei oder mehr weiteren Vorrichtungen ($UE_{1,1}$, $UE_{1,2}$, $UE_{2,1}$, $UE_{2,2}$, $UE_{2,3}$), wobei das System (100) Folgendes umfasst:

einen Speicher (102), der dazu ausgelegt ist, Funkfähigkeitsdaten zu speichern, die für sowohl die erste Vorrichtung als auch die zwei oder mehr weiteren Vorrichtungen eine Indikation eines verfügbaren Frequenzbandes umfassen;
einen Prozessor (101), der dazu ausgelegt ist, basierend auf den Funkfähigkeitsdaten zwei oder mehr Frequenzbänder auszuwählen, die für das Vorrichtung-zu-Vorrichtung-Broadcasting oder -Multicasting des Signals zu verwenden sind; und
einen Sender (103), der dazu ausgelegt ist, Konfigurationsdaten zu der ersten Vorrichtung und zu den zwei oder mehr weiteren Vorrichtungen zu übertragen, wobei die Konfigurationsdaten eine Indikation der ausgewählten zwei oder mehr Frequenzbänder umfassen.

2. System (100) nach Anspruch 1, wobei die erste Vorrichtung dazu ausgelegt ist, über eine erste drahtlose Verbindung mit einem ersten Netz (1) verbunden zu werden, und wobei mindestens eine der zwei oder mehr weiteren Vorrichtungen dazu ausgelegt ist, über eine zweite drahtlose Verbindung mit einem zweiten Netz (2), das sich vom ersten Netz unterscheidet, verbunden zu werden, und wobei der Sender (103) dazu ausgelegt ist, die Konfigurationsdaten über das erste Netz (1) zu der ersten Vorrichtung zu übertragen und die Konfigurationsdaten zu den zwei oder mehr weiteren Vorrichtungen von diesen über das zweite Netz (2) zu der mindestens einen der zwei oder mehr weiteren Vorrichtungen zu übertragen.

3. System (100) nach Anspruch 2, ferner umfassend einen ersten Empfänger (104), der dazu ausgelegt ist, mindestens einen ersten Teil der Funkfähigkeitsdaten für die erste Vorrichtung von einem ersten Netzknoten im ersten Netz (1) und für die mindestens eine der zwei oder mehr weiteren Vorrichtungen von einem zweiten Netzknoten im zweiten Netz (2) zu empfangen.

4. System (100) nach einem der vorangegangenen Ansprüche, ferner umfassend einen zweiten Empfänger (105), der dazu ausgelegt ist, mindestens einen zweiten Teil der Funkfähigkeitsdaten für die zwei oder mehr weiteren Vorrichtungen von den zwei oder mehr weiteren Vorrichtungen in einem weiteren Broadcast-Signal zu empfangen.

5. System (100) nach einem der vorangegangenen Ansprüche, wobei der Speicher (102) ferner dazu ausgelegt ist, weitere Daten zu speichern, die eines oder mehrere der Folgenden umfassen:

für das erste und/oder zweite Netz (1, 2) eine Indikation einer Anzahl von Vorrichtungen, die am Vorrichtung-zu-Vorrichtung-Broadcasting oder -Multicasting des Signals von der ersten Vorrichtung zu den zwei oder mehr weiteren Vorrichtungen beteiligt sind;
für das erste und/oder zweite Netz (1, 2) eine Indikation eines Verkehrsniveaus und/oder Störpegels für die Vorrichtungen, die am Vorrichtung-zu-Vorrichtung-Broadcasting oder -Multicasting des Signals von der ersten Vorrichtung zu den zwei oder mehr weiteren Vorrichtungen beteiligt sind; und
für das erste und/oder zweite Netz (1, 2) eine Indikation von Ausbreitungsbedingungen für die Vorrichtungen, die am Vorrichtung-zu-Vorrichtung-Broadcasting oder -Multicasting des Signals von der ersten Vorrichtung zu den zwei oder mehr weiteren Vorrichtungen beteiligt sind,
wobei der Prozessor (101) ferner dazu ausgelegt ist, eine Menge von Funkressourcen, die in den zwei oder mehr Frequenzbändern zu verwenden sind, basierend auf den weiteren Daten zu berechnen,
und wobei die Konfigurationsdaten ferner eine Indikation der berechneten Menge von Funkressourcen umfassen.

6. System (100) nach Anspruch 5, wobei die Indikation der berechneten Menge von Funkressourcen eine Spektrumsprungsequenz umfasst, die definiert, wann die Menge von Funkressourcen in der Zeit zu verwenden ist.

7. System (100) nach Anspruch 1, wobei die Konfigurationsdaten ferner eine Indikation von Folgendem umfassen:

einer ausgewählten Funkzugangstechnologie;
einer Menge von Funkressourcen; und/oder
einer Spektrumsprungsequenz, die definiert, wann die Menge von Funkressourcen in der Zeit zu verwenden ist.

8. Vorrichtung (200, UE$_{1,3}$) zum Übertragen eines Vorrichtung-zu-Vorrichtung-Broadcast- oder -Multicast-Signals zu zwei oder mehr weiteren Vorrichtungen (UE$_{1,1}$, UE$_{1,2}$, UE$_{2,1}$, UE$_{2,2}$, UE$_{2,3}$), wobei die Vorrichtung (200, UE$_{1,3}$) dazu ausgelegt ist, über eine erste drahtlose Verbindung mit einem ersten Netz (1) verbunden zu werden, und wobei mindestens eine der zwei oder mehr weiteren Vorrichtungen dazu ausgelegt ist, über eine zweite drahtlose Verbindung mit einem zweiten Netz (2), das sich vom ersten Netz unterscheidet, verbunden zu werden, wobei die Vorrichtung (200, UE$_{1,3}$) Folgendes umfasst:

einen ersten Empfänger (201), der dazu ausgelegt ist, Konfigurationsdaten von einem System (100) nach einem der Ansprüche 1-6 zu empfangen;
wobei die Konfigurationsdaten eine Indikation von zwei oder mehr Frequenzbändern umfassen; und
einen Sender (202), der dazu ausgelegt ist, das Vorrichtung-zu-Vorrichtung-Broadcast- oder -Multicast-Signal auf zwei oder mehr der Frequenzbänder basierend auf den Konfigurationsdaten zu übertragen.

9. Vorrichtung (200, UE$_{1,3}$) nach Anspruch 8, ferner umfassend einen zweiten Empfänger (203), der dazu ausgelegt ist, mindestens einen Teil von Funkfähigkeitsdaten für die mindestens eine der zwei oder mehr weiteren Vorrichtungen von der mindestens einen der zwei oder mehr weiteren Vorrichtungen in einem weiteren Broadcast-Signal zu empfangen, und wobei der Sender (202) ferner basierend auf den Funkfähigkeitsdaten konfiguriert ist.

10. Vorrichtung (200, UE$_{1,3}$) nach Anspruch 8 oder Anspruch 9, wobei die Konfigurationsdaten ferner eine Indikation einer Menge von Funkressourcen und/oder eine Spektrumsprungsequenz, die definiert, wann die Menge von Funkressourcen in der Zeit verwendet werden, umfassen.

11. Vorrichtung (200, UE$_{1,3}$) nach einem der Ansprüche 8-10, wobei der Sender (202) dazu ausgelegt ist, denselben Datenteil des Vorrichtung-zu-Vorrichtung-Broadcast- oder -Multicast-Signals auf mindestens einem ersten der Frequenzbänder und einem zweiten der Frequenzbänder zu übertragen.

12. Vorrichtung (200, UE$_{1,3}$) nach einem der Ansprüche 8-11, wobei der Sender (2020) dazu ausgelegt ist, unterschiedliche Datenteile des Vorrichtung-zu-Vorrichtung-Broadcast- oder -Multicast-Signals auf den zwei oder mehr der Frequenzbänder zu übertragen.

13. Vorrichtung (300, UE$_{1,1}$, UE$_{1,2}$, UE$_{2,1}$, UE$_{2,2}$, UE$_{2,3}$) zum Empfangen eines Vorrichtung-zu-Vorrichtung-Broadcast- oder -Multicast-Signals, wobei die Vorrichtung dazu ausgelegt ist, über eine drahtlose Verbindung mit einem Netz (1, 2) verbunden zu werden, wobei die Vorrichtung Folgendes umfasst:

einen ersten Empfänger (301), der dazu ausgelegt ist, Konfigurationsdaten von einem System (100) nach einem der Ansprüche 1-6 zu empfangen;
wobei die Konfigurationsdaten eine Indikation von zwei oder mehr Frequenzbändern umfassen; und
einen zweiten Empfänger (302), der dazu ausgelegt ist, das Vorrichtung-zu-Vorrichtung-Broadcast- oder -Multicast-Signal auf zwei oder mehr der Frequenzbänder basierend auf den Konfigurationsdaten zu empfangen.

14. Vorrichtung nach Anspruch 13, wobei die Konfigurationsdaten ferner eine Indikation einer Menge von Funkressourcen und/oder eine Spektrumsprungsequenz, die definiert, wann die Menge von Funkressourcen in der Zeit verwendet werden, umfassen.

15. Verfahren zum Ermöglichen von Vorrichtung-zu-Vorrichtung-Broadcasting oder -Multicasting eines Signals von einer ersten Vorrichtung (UE$_{1,3}$) zu zwei oder mehr weiteren Vorrichtungen (UE$_{1,1}$, UE$_{1,2}$, UE$_{2,1}$, UE$_{2,2}$, UE$_{2,3}$), wobei das Verfahren Folgendes umfasst:

Speichern (1001) von Funkfähigkeitsdaten, die für sowohl die erste Vorrichtung als auch die zwei oder mehr weiteren Vorrichtungen eine Indikation eines verfügbaren Frequenzbandes umfassen;

Auswählen (1002), basierend auf den Funkfähigkeitsdaten, von zwei oder mehr Frequenzbändern, die für das Vorrichtung-zu-Vorrichtung-Broadcasting oder -Multicasting des Signals zu verwenden sind; und

Übertragen (1003) von Konfigurationsdaten zu der ersten Vorrichtung und zu den zwei oder mehr weiteren Vorrichtungen, wobei die Konfigurationsdaten eine Indikation der ausgewählten zwei oder mehr Frequenzbänder umfassen.

16. Verfahren nach Anspruch 15, wobei die erste Vorrichtung dazu ausgelegt ist, über eine erste drahtlose Verbindung mit einem ersten Netz (1) verbunden zu werden, und wobei mindestens eine der zwei oder mehr weiteren Vorrichtungen dazu ausgelegt ist, über eine zweite drahtlose Verbindung mit einem zweiten Netz (2), das sich vom ersten Netz unterscheidet, verbunden zu werden, wobei das Verfahren ferner ein Empfangen (1004) von mindestens einem Teil der Funkfähigkeitsdaten für die erste Vorrichtung von einem ersten Netzknoten im ersten Netz (1) und für die mindestens eine der zwei oder mehr weiteren Vorrichtungen von einem zweiten Netzknoten im zweiten Netz (2) umfasst.

17. Verfahren nach Anspruch 15 oder Anspruch 16, ferner umfassend Empfangen (1005) von mindestens einem zweiten Teil der Funkfähigkeitsdaten für die zwei oder mehr weiteren Vorrichtungen von den zwei oder mehr weiteren Vorrichtungen in einem weiteren Broadcast-Signal.

18. Verfahren nach einem der Ansprüche 15-17, ferner umfassend:

Speichern (1006) von weiteren Daten, die eines oder mehrere der Folgenden umfassen:

für das erste und/oder zweite Netz (1, 2) eine Indikation einer Anzahl von Vorrichtungen, die am Vorrichtung-zu-Vorrichtung-Broadcasting oder -Multicasting des Signals von der ersten Vorrichtung zu den zwei oder mehr weiteren Vorrichtungen beteiligt sind;

für das erste und/oder zweite Netz (1, 2) eine Indikation eines Verkehrsniveaus und/oder Störpegels für die Vorrichtungen, die am Vorrichtung-zu-Vorrichtung-Broadcasting oder -Multicasting des Signals von der ersten Vorrichtung zu den zwei oder mehr weiteren Vorrichtungen beteiligt sind; und

für das erste und/oder zweite Netz (1, 2) eine Indikation von Ausbreitungsbedingungen für die Vorrichtungen, die am Vorrichtung-zu-Vorrichtung-Broadcasting oder -Multicasting des Signals von der ersten Vorrichtung zu den zwei oder mehr weiteren Vorrichtungen beteiligt sind, und Berechnen (1007), basierend auf den weiteren Daten, einer Menge von Funkressourcen, die in den zwei oder mehr Frequenzbändern zu verwenden sind, und wobei die Konfigurationsdaten ferner eine Indikation der berechneten Menge von Funkressourcen und/oder eine Spektrumsprungsequenz, die definiert, wann die Menge von Funkressourcen in der Zeit verwendet werden, umfassen.

19. Computerprogrammprodukt, das bei Ausführung durch einen Prozessor (101) dazu eingerichtet ist, das Verfahren nach einem der Ansprüche 15-18 durchzuführen.

## Revendications

1. Système (100) permettant la diffusion ou la diffusion multiple de dispositif à dispositif d'un signal provenant d'un premier dispositif ($UE_{1,3}$) vers deux ou plusieurs autres dispositifs ($UE_{1,1}$, $UE_{1,2}$, $UE_{2,1}$, $UE_{2,2}$, $UE_{2,3}$), le système (100) comprenant :

une mémoire (102) configurée pour stocker des données de capacité radio comprenant pour chacun parmi le premier dispositif et les deux ou plusieurs autres dispositifs une indication d'une bande de fréquences disponible ;

un processeur (101) configuré pour sélectionner, en fonction des données de capacité radio, deux bandes de fréquences ou plus à utiliser pour la diffusion ou la diffusion multiple du signal de dispositif à dispositif ; et

un émetteur (103) configuré pour transmettre des données de configuration au premier dispositif et aux deux autres dispositifs ou plus, les données de configuration comprenant une indication des deux bandes de fréquence sélectionnées ou plus.

2. Système (100) selon la revendication 1, dans lequel le premier dispositif est configuré pour être connecté par une première connexion sans fil à un premier réseau (1) et dans lequel au moins l'un des deux autres dispositifs ou plus est configuré pour être connecté par une seconde connexion sans fil à un second réseau (2) différent du premier réseau, et dans lequel l'émetteur (103) est configuré pour transmettre les données de configuration au premier dispositif par le premier réseau (1) et pour transmettre les données de configuration aux deux ou plusieurs autres dispositifs dont à l'au moins un des deux ou plusieurs autres dispositifs par le second réseau (2).

**3.** Système (100) selon la revendication 2, comprenant en outre un premier récepteur (104) configuré pour recevoir au moins une première partie des données de capacité radio pour le premier dispositif depuis un premier noeud de réseau au sein du premier réseau (1) et pour l'au moins un des deux autres dispositifs ou plus depuis un second noeud de réseau au sein du second réseau (2).

**4.** Système (100) selon l'une quelconque des revendications précédentes, comprenant en outre un second récepteur (105) configuré pour recevoir au moins une seconde partie des données de capacité radio pour les deux ou plusieurs autres dispositifs en provenance des deux ou plusieurs autres dispositifs dans un autre signal de diffusion.

**5.** Système (100) selon l'une quelconque des revendications précédentes, dans lequel la mémoire (102) est en outre configurée pour stocker d'autres données comprenant un ou plusieurs des éléments suivants :

pour au moins l'un des premier et second réseaux (1, 2), une indication d'un certain nombre de dispositifs impliqués dans la diffusion ou la diffusion multiple de dispositif à dispositif du signal provenant du premier dispositif vers les deux ou plusieurs autres dispositifs ;
pour au moins l'un des premier et second réseaux (1, 2), une indication d'un niveau de trafic et/ou d'un niveau de brouillage pour les dispositifs impliqués dans la diffusion ou la diffusion multiple de dispositif à dispositif du signal du premier dispositif aux deux ou plusieurs autres dispositifs ; et
pour au moins l'un des premier et second réseaux (1, 2), une indication de conditions de propagation pour les dispositifs impliqués dans la diffusion ou la diffusion multiple de dispositif à dispositif du signal provenant du premier dispositif vers les deux ou plusieurs autres dispositifs ;
dans lequel le processeur (101) est en outre configuré pour calculer, sur la base des données supplémentaires, une quantité de ressources radio à utiliser dans les deux bandes de fréquences ou plus,
et dans lequel les données de configuration comprennent en outre une indication de la quantité calculée de ressources radio.

**6.** Système (100) selon la revendication 5, dans lequel l'indication de la quantité calculée de ressources radio comprend une séquence de sauts de spectre définissant quand la quantité de ressources radio doit être utilisée dans le temps.

**7.** Système (100) selon la revendication 1, dans lequel les données de configuration comprennent en outre une indication des éléments suivants :

une technologie d'accès radio sélectionnée ;
une quantité de ressources radio ; et/ou
une séquence de sauts de spectre définissant quand la quantité de ressources radio est utilisée dans le temps.

**8.** Dispositif (200, $UE_{1,3}$) pour transmettre un signal de diffusion ou de diffusion multiple de dispositif à dispositif à deux ou plusieurs autres dispositifs ($UE_{1,1}$, $UE_{1,2}$, $UE_{2,1}$, $UE_{2,2}$, $UE_{2,3}$), dans lequel le dispositif (200, $UE_{1,3}$) est configuré pour être connecté par une première connexion sans fil à un premier réseau (1) et dans lequel au moins l'un des deux autres dispositifs ou plus est configuré pour être connecté par une seconde connexion sans fil à un second réseau (2) différent du premier réseau, le dispositif (200, $UE_{1,3}$) comprenant :

un premier récepteur (201) configuré pour recevoir d'un système (100) selon l'une quelconque des revendications 1 à 6 des données de configuration ; les données de configuration comprenant une indication de deux bandes de fréquences ou plus ; et
un émetteur (202) configuré pour transmettre le signal de diffusion ou de diffusion multiple de dispositif à dispositif sur au moins deux bandes de fréquences sur la base des données de configuration.

**9.** Dispositif (200, $UE_{1,3}$) selon la revendication 8, comprenant en outre un second récepteur (203) configuré pour recevoir au moins une partie des données de capacité radio pour l'au moins un des deux ou plusieurs autres dispositifs en provenance de l'au moins un des deux ou plusieurs autres dispositifs dans un autre signal de diffusion, et dans lequel l'émetteur (202) est en outre configuré sur la base des données de capacité radio.

**10.** Dispositif (200, $UE_{1,3}$) selon la revendication 8 ou la revendication 9, dans lequel les données de configuration comprennent en outre une indication d'une quantité de ressources radio et/ou une séquence de sauts de spectre définissant quand la quantité de ressources radio est utilisée dans le temps.

**11.** Dispositif (200, $UE_{1,3}$) selon l'une quelconque des revendications 8 à 10, dans lequel l'émetteur (202) est configuré pour transmettre une même partie de données du signal de diffusion ou de diffusion multiple de dispositif à dispositif sur au moins une première des bandes de fréquences et une seconde des bandes de fréquences.

**12.** Dispositif (200, UE$_{1,3}$) selon l'une quelconque des revendications 8 à 11, dans lequel l'émetteur (2020) est configuré pour transmettre différentes parties de données du signal de diffusion ou de diffusion multiple de dispositif à dispositif sur les au moins deux des bandes de fréquences.

**13.** Dispositif (300, UE$_{1,1}$, UE$_{1,2}$, UE$_{2,1}$, UE$_{2,2}$, UE$_{2,3}$) pour recevoir un signal de diffusion ou de diffusion multiple de dispositif à dispositif, dans lequel le dispositif est configuré pour être connecté par une connexion sans fil à un réseau (1, 2), le dispositif comprenant :

un premier récepteur (301) configuré pour recevoir d'un système (100) selon l'une quelconque des revendications 1 à 6 des données de configuration ;
les données de configuration comprenant une indication de deux bandes de fréquences ou plus ; et
un second récepteur (302) configuré pour recevoir le signal de diffusion ou de diffusion multiple de dispositif à dispositif sur au moins deux des bandes de fréquences sur la base des données de configuration.

**14.** Dispositif selon la revendication 13, dans lequel les données de configuration comprennent en outre une indication d'une quantité de ressources radio et/ou une séquence de sauts de spectre définissant quand la quantité de ressources radio est utilisée dans le temps.

**15.** Procédé permettant la diffusion ou la diffusion multiple de dispositif à dispositif d'un signal provenant d'un premier dispositif (UE$_{1,3}$) vers deux ou plusieurs autres dispositifs (UE$_{1,1}$, UE$_{1,2}$, UE$_{2,1}$, UE$_{2,2}$, UE$_{2,3}$), le procédé comprenant :

le stockage (1001) des données de capacité radio comprenant, pour chaque dispositif parmi le premier dispositif et les deux ou plusieurs autres dispositifs, une indication d'une bande de fréquences disponible ;
la sélection (1002), en fonction des données de capacité radio, de deux bandes de fréquences ou plus à utiliser pour la diffusion ou la diffusion multiple du signal de dispositif à dispositif ; et
la transmission (1003) des données de configuration au premier dispositif et aux deux autres dispositifs ou plus, les données de configuration comprenant une indication des deux bandes de fréquence sélectionnées ou plus.

**16.** Procédé selon la revendication 15, dans lequel le premier dispositif est configuré pour être connecté par une première connexion sans fil à un premier réseau (1) et dans lequel au moins l'un des deux autres dispositifs ou plus est configuré pour être connecté par une seconde connexion sans fil à un second réseau (2) différent du premier réseau, le procédé comprenant en outre la réception (1004) d'au moins une partie des données de capacité radio pour le premier dispositif depuis un premier noeud de réseau appartenant au premier réseau (1) et pour l'au moins un des deux autres dispositifs ou plus depuis un second noeud de réseau appartenant au second réseau (2).

**17.** Procédé selon la revendications 15 ou la revendication 16, comprenant en outre la réception (1005) d'au moins une seconde partie des données de capacité radio pour les deux ou plusieurs autres dispositifs en provenance des deux ou plusieurs autres dispositifs dans un autre signal de diffusion.

**18.** Procédé selon l'une quelconque des revendications 15 à 17, comprenant en outre le stockage (1006) d'autres données comprenant un ou plusieurs des éléments suivants :

pour au moins l'un des premier et second réseaux (1, 2), une indication d'un certain nombre de dispositifs impliqués dans la diffusion ou la diffusion multiple de dispositif à dispositif du signal provenant du premier dispositif vers les deux ou plusieurs autres dispositifs ;
pour au moins l'un des premier et second réseaux (1, 2), une indication d'un niveau de trafic et/ou d'un niveau de brouillage pour les dispositifs impliqués dans la diffusion ou la diffusion multiple de dispositif à dispositif du signal du premier dispositif aux deux ou plusieurs autres dispositifs ; et
pour au moins l'un des premier et second réseaux (1, 2), une indication de conditions de propagation pour les dispositifs impliqués dans la diffusion ou la diffusion multiple de dispositif à dispositif du signal provenant du premier dispositif vers les deux ou plusieurs autres dispositifs ; et
le calcul (1007), sur la base des données supplémentaires, d'une quantité de ressources radio à utiliser dans les deux bandes de fréquences ou plus,
et dans lequel les données de configuration comprennent en outre une indication de la quantité de ressources radio calculée et/ou d'une séquence de sauts de spectre définissant quand la quantité de ressources radio est utilisée dans le temps.

**19.** Produit de programme informatique qui, lorsqu'il est exécuté par un processeur (101), est conçu pour mettre en oeuvre le procédé selon l'une quelconque des revendications 15 à 18.

**Fig.1**

**Fig.2**

**Fig.3**

**Fig.4**

**Fig.5**

**Fig.6**

**Fig.7**

**Fig.8**

Fig.9

Fig.10

**Fig.11**

**Fig.12**

Fig.13

Fig.14

Fig.15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110258327 A

**Non-patent literature cited in the description**

- **T. KOSKELA.** Clustering Concept using Device-to-Device Communication in Cellular System. *IEEE WCNC,* 2010
- **J. SEPPALA.** Network Controlled Device-to-Device (D2D) and Cluster Multicast Concept for LTE and LTE-A Networks. *IEEE WCNC,* 2011
- Feasibility Study for Proximity Services (ProSe), (Release 12). *3GPP TR 22.803,* May 2012
- **W. YANG ; W. SUN ; L. LI.** Reliable Multicasting for Device-to-Device Radio Underlaying Cellular Networks. *Cornell University Library, http://arxiv.org/abs/1008.3741v2*